# EUROPEAN PATENT SPECIFICATION

(11) **EP 2 853 762 B1**
(45) Date of publication and mention of the grant of the patent: **03.01.2018**
(21) Application number: 13810076.3
(22) Date of filing: 27.06.2013
(51) Int. Cl.: F16C 35/067, F16C 33/58, F16C 35/04, F16C 19/54, F16C 19/06

(54) **ROLLING BEARING UNIT WITH MOUNTING PLATE, AND METHOD FOR MANUFACTURING SAME**
WÄLZLAGEREINHEIT MIT MONTAGEPLATTE UND VERFAHREN ZUR HERSTELLUNG DAVON
UNITÉ DE ROULEMENT COMPRENANT UNE PLAQUE DE MONTAGE ET SON PROCÉDÉ DE FABRICATION

(30) Priority: 29.06.2012 JP 2012146398; 20.08.2012 JP 2012181681
(43) Date of publication of application: 01.04.2015
(73) Proprietor: NSK Ltd., Tokyo 141-8560 (JP)
(72) Inventor: SUGIMAN, Tomoharu, Fujisawa-shi, Kanagawa 2518501 (JP)
(74) Representative: Hoarton, Lloyd Douglas Charles
(86) International application number: PCT/JP2013/067737
(87) International publication number: WO 2014/003149

(56) References cited:
- DE-A1-102004 031 830
- DE-B3-102008 021 832
- JP-A- 2000 074 079
- JP-A- 2005 308 135
- JP-A- 2007 247 857
- JP-A- 2009 014 096
- JP-A- 2009 030 794

## Description

### TECHNICAL FIELD

The present invention relates to a rolling bearing unit with retainer plate that is used for rotatably supporting the end section of a rotating shaft of an automobile transmission or the like on the inside surface of a housing, and to the manufacturing method thereof.

### BACKGROUND ART

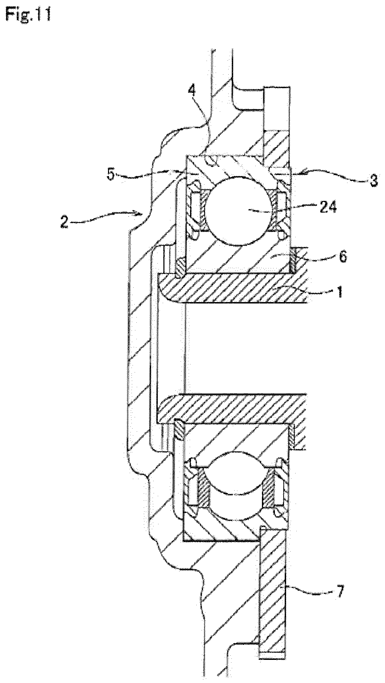

As illustrated in FIG. 11, the end section of a rotating shaft 1 such as a counter shaft of an automobile transmission is rotatably supported by a radial rolling bearing 3 such as a single-row deep-groove ball bearing on the inside surface of a housing 2 that houses part of the automobile transmission. More specifically, a circular concave support section 4 is provided on the inside surface of the housing 2, and the outer ring 5 of the radial rolling bearing 3 is fastened inside this concave support section 4 with an interference fit. The end section of the rotating shaft 1 is fitted inside the inner ring 6 of the radial rolling bearing 3 with an interference fit or the like so that there is no looseness in the radial direction. The outer ring 5 is prevented from coming apart from the concave support section 4 by being held down toward the rear section of the concave support section 4 by a retainer plate 7.

Mounting the radial rolling bearing 3 and retainer plate 7 into the housing 2 can be simplified by integrating these members as a rolling bearing unit with retainer plate such as disclosed in JP 2008-267585 (A), JP 2009-030794 (A), JP 2009-036319 (A) and the like. FIG. 12 and FIG. 13 illustrate an example of a rolling bearing unit with retainer plate. This rolling bearing unit with retainer plate 8 is constructed by fitting a retainer plate 7 around a small-diameter stepped section 9 that is provided on one end in the axial direction of the outer-circumferential surface of the outer ring 5 of a radial rolling bearing 3 so as to be able to rotate with respect to the outer ring 5. The rolling bearing unit with retainer plate 8 is assembled inside the housing 2 by fitting the outer ring 5 inside the concave support section 4 with an interference fit, and bringing one surface of the retainer plate 7 in contact with the inside surface of the housing 2. Furthermore, the retainer plate 7 is rotated with respect to the outer ring 5 to align mounting holes 10, which are screw holes or through holes, with through holes or screw holes (not illustrated in the figures) that are formed in the inside surface of the housing 2, and by screwing the retainer plate 7 to the housing with screws or bolts, the outer ring 5 is supported by and fastened inside the concave support section 4 in a state such that there is no looseness and so as to be prevented from coming apart from the concave support section 4.

In the rolling bearing unit with retainer plate 8, the retainer plate 7 is joined with the outer ring 5 so that relative rotation is possible and so as not to become separated. The reason for making rotation possible is so that after the outer ring 5 has been fitted inside the concave support section 4 with an interference fit or the like in a state such that looseness in the radial direction is prevented, the mounting holes 10 of the retainer plate 7 can be aligned with the through holes or screw holes of the housing 2. Moreover, the reason for making separation not possible is so that the radial rolling bearing 3 and retainer plate 7 can be handled as a single unit, which simplifies the management of parts and the assembly work.

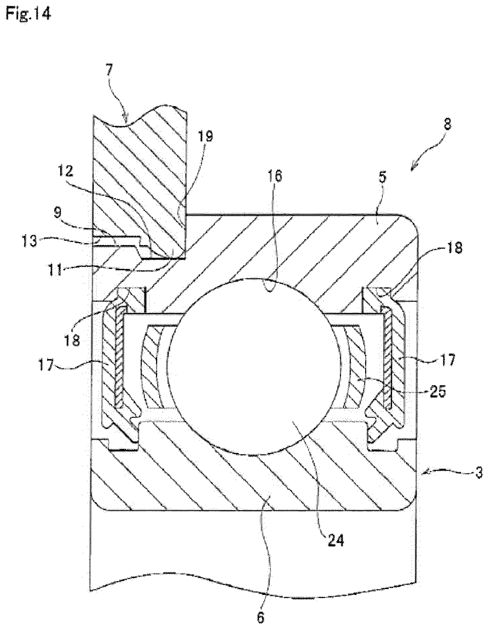

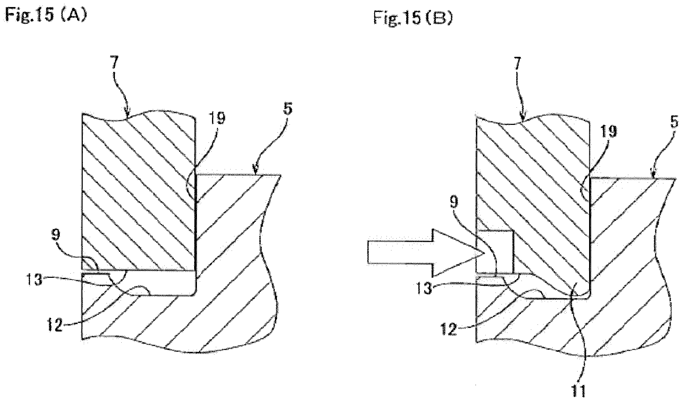

In order to join the retainer plate 7 to the outer ring 5 so that relative rotation is possible and so as not to become separated, in the case of the construction disclosed in JP 2008-267585 (A) and as illustrated in FIG. 14, engagement protrusions 11 that are formed at plural locations in the circumferential direction around the inner-circumferential edge of the retainer plate 7 are engaged with an engagement groove 12 that is provided around the outer-circumferential surface of the small-diameter stepped section 9 of the outer ring 5. More specifically, as illustrated in FIG. 15A, in a state in which the small-diameter stepped section 9 is fitted inside a support hole 13 of the retainer plate 7, then as illustrated in FIG. 15B, plural locations in the circumferential direction of the circumferential edge of the support hole 13 of the retainer plate 7, which has a fixed inner diameter, are pressed in the axial direction, which causes part of the inner circumferential edge of the retainer plate 7 to plastically deform inward in the radial direction, and by doing so forms plural engagement protrusions 11 and causes the engagement protrusions 11 to engage with the engagement groove 12.

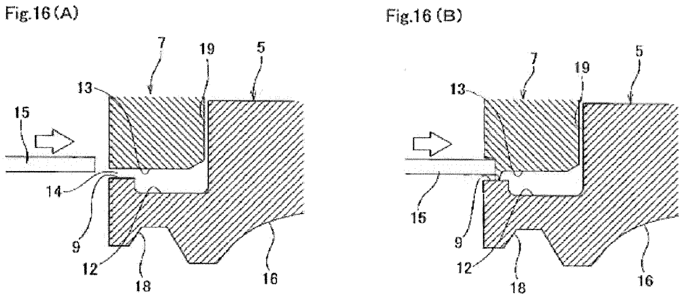

With the rolling bearing unit with retainer plate having this construction, it is not possible to stably engage engagement protrusions 11 with the engagement groove 12, and there is a possibility that the cost will increase due to worsening of the yield of the rolling bearing unit with retainer plate. In other words, with this construction, in order to allow relative rotation between the retainer plate 7 and the outer ring 5, and to maintain concentricity between the retainer plate 7 and the outer ring 5, it is necessary that the difference between the inner diameter of the support hole 13 that is provided on the retainer plate 7 side and the outer diameter of the small-diameter stepped section 9 that is provided on the outer ring 5 side be very small. That is, as illustrated in FIG. 16A, in a state in which the small-diameter stepped section 9 is fitted inside the support hole 13, the width dimension in the radial direction of a minute gap 14 that exists between the inner-circumferential surface of the support hole 13 and the outer-circumferential surface of the small-diameter stepped section 9 is very small. Therefore, as illustrated in FIG. 16A, when a punch 15 is pressed against part of the circumferential edge of the support hole 13 on the side surface in the axial direction of the retainer plate 7 when forming the engagement protrusions 11 around the inner-circumferential edge of the retainer plate 7, the portions of the inner-circumferential edge of the retainer plate 7 that are plastically deformed come in contact with the end section in the axial direction of the small-diameter stepped section 9 that is separated from the engagement groove 12 as illustrated in FIG. 16B. As a result, not only is it not possible to engage the engagement protrusions 11 with the engagement groove 12, there is also a possibility that harmful deformation in a direction causing the diameter to contract will occur on the end section in the axial direction of the outer ring 5 that is on the small-diameter stepped section 9 side.

By making the inner diameter of the support hole 13 sufficiently larger than the outer diameter of the small-diameter stepped section 9, the plastically deformed portions on part of the inner-circumferential edge of the retainer plate 7 that are formed by pressing by the punch 15 before the engagement protrusions 11 are formed are prevented from coming in contact with the end section in the axial direction of the small-diameter stepped section 9. However, with this kind of construction, the amount of run-out (maximum eccentricity) of the retainer plate 7 with respect to the outer ring 5 becomes large, so unless the engagement protrusions 11 are made sufficiently high and the engagement groove 12 sufficiently deep, there is a problem in that it becomes easy for the engagement protrusions 11 to come apart from the engagement groove 12. Moreover, concentricity of the retainer plate 7 and the outer ring 5 is lost, so there is a problem in that the ease of handling of the rolling bearing unit with retainer plate 8 is reduced; for example the work of fastening the retainer plate 7 to the housing 2 (see FIG. 11) with screws becomes troublesome.

A manufacturing method is disclosed in JP 2009-036319 (A) in which plural engagement protrusions are formed around the circumferential edge of the support hole that is provided in the retainer plate before the retainer plate and outer ring are combined, and then the retainer plate and outer ring are combined while being elastically deformed. However, in this case, there is a possibility that harmful deformation will occur in the outer ring when combining the retainer plate and outer ring.

Construction is disclosed in JP 2009-030794 (A) in which the retainer plate and outer ring are combined by way of an incomplete ring-shaped retaining ring that is locked to the outer-ring side. However, with this construction increased manufacturing costs of the rolling bearing unit with retainer plate due to an increase in the number of parts cannot be avoided.

### [Related Literature]

### [Patent Literature]

- [Patent Literature 1]: JP 2008-267585 (A)
- [Patent Literature 2]: JP 2009-030794 (A)
- [Patent Literature 3]: JP 2009-036319 (A)

### SUMMARY OF INVENTION

### [Problem to be Solved by Invention]

Taking into consideration the problems above, the object of the present invention is to provide a low-cost rolling bearing unit with retainer plate that can be easily handled and that maintains concentricity of the outer ring and retainer plate without the occurrence of harmful deformation of the outer ring.

### [Means for Solving Problems]

The rolling bearing unit with retainer plate of the present invention has: an outer ring; an inner ring; plural rolling bodies; and a retainer plate. The outer ring has an outer ring raceway around the inner-circumferential surface thereof. The inner ring is arranged to be concentric with the outer ring and has an inner ring raceway around the outer-circumferential surface thereof. The plural rolling bodies are provided between the outer ring raceway and the inner ring raceway so as to rotate freely. The retainer plate has a support hole and plural mounting holes that are provided around the support hole.

In the rolling bearing unit with retainer plate of the present invention, a small-diameter stepped section is provided completely around one end section in the axial direction of the outer-circumferential surface of the outer ring, and an engagement groove that extends in the circumferential direction is provided around the portion further close to the middle in the axial direction than the end section in the axial direction of the small-diameter stepped section.

Moreover, the support hole in the retainer plate has an inner diameter that is larger than the outer diameter of the small-diameter stepped section, and is less than the outer diameter of the portion of the outer-circumferential surface of the outer ring that is adjacent in the axial direction to the small-diameter stepped section. Large-diameter sections that are recessed outward in the radial direction of the inner-circumferential edge of the support hole are provided at plural locations in the circumferential direction of the support hole.

Engagement protrusions that protrude inward in the radial direction from the circumferential edge of the large-diameter sections are provided on parts of those circumferential edges of the large-diameter sections, and the diameter of the inscribed circle of the engagement protrusions is less than the outer diameter of the end section in the axial direction of the small-diameter stepped section, and equal to or greater than the diameter of the bottom section of the engagement groove.

The outer ring and the retainer plate are combined so as not to come apart by the engagement protrusions engaging with the engagement groove so that relative movement in the circumferential direction is possible.

In the rolling bearing unit with retainer plate of the present invention, the large-diameter sections and the engagement protrusions are provided at plural locations in the circumferential direction, and preferably at three or more locations that are uniformly spaced in the circumferential direction.

The engagement groove is provided on the portion except the end section in the axial direction of the small-diameter stepped section so as to extend in at least the circumferential direction. Preferably, the engagement groove is provided on the portion except the end section in the axial direction of the small-diameter stepped section, which is from the middle section in the axial direction to the base section in the axial direction, and completely around the small-diameter stepped section. Alternatively, it is preferred that, the engagement groove is provided on the portion except the end section in the axial direction and the base section in the axial direction of the small-diameter stepped section, which is the middle section in the axial direction, completely around the small-diameter stepped section. When the engagement groove is not provided completely around the entire circumference, engagement grooves are formed at plural locations that are aligned in the circumferential direction with the large-diameter sections where the engagement protrusions are formed.

In the rolling bearing unit with retainer plate of the present invention, preferably notches that extend in the circumferential direction, with the diameter of the circumscribed circle thereof being greater than the outer diameter of the outer ring, are formed in portions of the inner-circumferential edge of the support hole where the phase in the circumferential direction coincides with the plural mounting holes, and the portions close to the inner diameter of the one side surface in the axial direction of the retainer plate and the step surface that extends in the radial direction between the outer-circumferential surface of the outer ring and the base section of the small-diameter stepped section engage at positions where the phase in the circumferential direction differs from the plural mounting holes.

The present invention can be applied to a rolling bearing unit with retainer plate in which only one support hole is provided in the retainer plate, and in that case, the outer ring and retainer plate are combined such that relative displacement in the circumferential direction of the outer ring is possible. Moreover the present invention can be applied to a rolling bearing unit with retainer plate in which plural support holes are provided, and in that case the outer ring and retainer plate are combined so that relative displacement in the radial direction of the support holes is possible.

In the rolling bearing unit with retainer plate of the present invention, preferably the diameter of the inscribed circle of the mounting holes in the retainer plate is greater than the outer diameter of the outer ring.

The rolling bearing with retainer plate of the present invention can be obtained by a manufacturing method having a step of: plastically deforming parts of the circumferential edges of the large-diameter sections on the surface of the other side in the axial direction of the retainer plate inward in the radial direction to form the engagement protrusions, by pressing the parts of the circumferential edges of the large-diameter sections toward the step surface that extends in the radial direction between the outer-circumferential surface of the outer ring and the base section of the small-diameter stepped section of the outer ring, with the small-diameter stepped section fitted inside the support hole of the retainer plate before the engagement protrusions are formed, combining the outer ring and retainer plate by engaging the engagement protrusions with the engagement groove.

In the manufacturing method of the present invention, the engagement protrusions can be formed by pressing a wedge-shaped first punch against the parts of the circumferential edges of the large-diameter sections of the other side surface in the axial direction of the retainer plate before the engagement protrusions are formed to form V-shaped concave grooves that open on the side of the other side surface in the axial direction of the retainer plate, causing the portions of the parts of the circumferential edges of the large-diameter sections that are located further on the inside in the radial direction than the concave grooves to plastically deform inward in the radial direction, and then by pressing a second punch inside the concave grooves causing the portions that are located further on the inside in the radial direction than the concave grooves to plastically deform further in the radial direction.

Moreover, preferably a restraining jig is arranged around the outer ring so as to surround the outer ring, and by supporting the intermediate portion in the radial direction of the one side surface in the axial direction of the retainer plate with the restraining jig when forming the engagement protrusions, the processing load is prevented from being applied to the outer ring.

### [Effect of Invention]

With the construction of the rolling bearing unit with retainer plate of the present invention, engagement protrusions on the retainer plate side that engage with the engagement groove on the outer ring side are formed by plastically deforming parts of the circumferential edges of large-diameter sections that are provided at plural locations on the inner-circumferential edge of the retainer plate, so during the processing of the engagement protrusions, portions of the retainer plate that are plastically deformed come in contact with the end section in the axial direction of the small-diameter stepped section of the outer ring, and so these portions do not strongly press the outer-circumferential surface of the small-diameter section inward in the radial direction. Therefore, harmful forces do not act on any of the parts when combining the outer ring and the retainer plate, and harmful deformation of these parts is prevented, so it is possible to improve the yield of the rolling bearing unit with retainer plate.

Moreover, with the construction of the present invention, the inner-circumferential surface of the retainer plate and the outer-circumferential surface of the small-diameter stepped section face each other through a minute gap except in the portions of the large-diameter sections. Therefore, it is possible to keep the amount of torsional rotation (maximum eccentricity) of the retainer plate with respect to the outer ring to a very small amount, and thus it is possible to maintain concentricity of the outer ring and retainer plate.

Furthermore, the construction of the present invention, is construction in which it is possible to combine the outer ring and retainer plate directly without the use of separate parts, so it is possible to suppress the manufacturing costs of parts, the cost of managing parts, and assembly costs, and thus it is possible to lower the cost of the rolling bearing unit with retainer plate.

### BRIEF DESCRIPTION OF DRAWINGS

FIG. 1 is an orthographical view of the combined outer ring and retainer plate of a rolling bearing unit with retainer plate of a first example of an embodiment of the present invention as seen from the side where the retainer plate is installed.
FIG. 2 is a partial perspective view illustrating the state of a cut through the section X-X in FIG. 1.
FIG. 3 is an orthographical view of the retainer plate of the first example of an embodiment of the present invention before being combined with the outer ring as seen from the same direction as in FIG. 1.

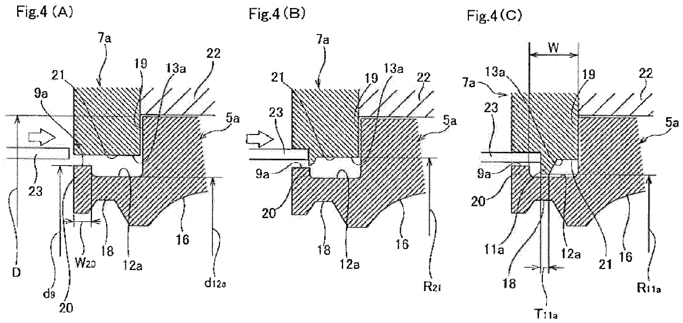

FIG. 4A to FIG. 4C illustrate the process of combining the retainer plate and outer ring of the first example of an embodiment of the present invention, where FIG. 4A is a cross-sectional view illustrating the state in which the retainer plate is fitted with the outer ring; FIG. 4B is a cross-sectional view illustrating the state in which the circumferential edge of the support hole on the side surface in the axial direction of the retainer plate is pressed by a punch; and FIG. 4C is a cross-sectional view illustrating the state in which, at the same time that engagement protrusions are formed on the retainer plate, the engagement protrusions are made to engage with the engagement groove of the outer ring.

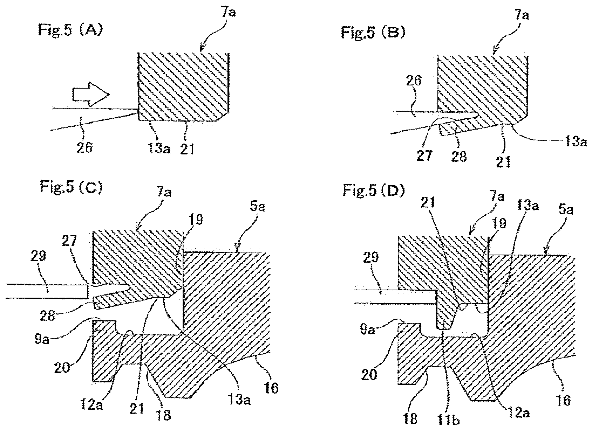

FIG. 5A to FIG. 5D illustrate the process of combining the retainer plate and outer ring of a second example of an embodiment of the present invention, where FIG. 5A is a cross-sectional view illustrating the state in which the circumferential edge of the support hole on the side surface in the axial direction of the retainer plate is pressed with a punch; FIG. 5B is a cross-sectional view illustrating the state in which a V-shaped concave groove is formed around the circumferential edge of the support hole of the retainer plate; FIG. 5C is a cross-sectional view illustrating the state in which the retainer plate is fitted to the outer ring, and the circumferential edge of the support hole on the side surface in the axial direction of the retainer plate is pressed with a punch; and FIG. 5D is a cross-sectional view illustrating the state in which at the same time that engagement protrusions are formed on the retainer plate, the engagement protrusions are made to engage with the engagement groove of the outer ring.
FIG. 6 is a partial cross-sectional view illustrating the state in which a engagement protrusion of the retainer plate is engaged with the engagement groove of the outer ring of a third example of an embodiment of the present invention.
FIG. 7A(a) is a schematic diagram of retainer plate of a fourth example of an embodiment of the present invention as seen from the same direction as in FIG. 3; FIG. 7A(b) is a line diagram of the fourth example, and illustrates the change in roundness of the outer ring as bolts are inserted into the mounting holes of the retainer plate; FIG. 7B(a), (b) are the same as FIG. 7A(a), (b) for construction in which an embodiment of the present invention is not employed.
FIG. 8 is a cross-sectional view of the section where the retainer plate is fastened to the housing, and is for explaining the reason why the roundness of the outer ring worsens as bolts are tightened.
FIG. 9 is an orthographical view of a fifth example of an embodiment of the present invention, and illustrates the retainer plate before being combined with the outer ring as seen from the same direction as in FIG. 3.
FIG. 10 is a cross-sectional view illustrating the assembled state of a rolling bearing unit with retainer plate of the fifth example of an embodiment of the present invention.
FIG. 11 is a partial cross-sectional view of an example of conventional construction, and illustrates the state in which the rolling bearing unit with retainer plate is assembled into the housing.

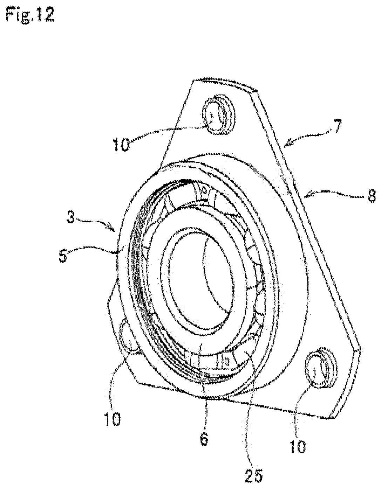

FIG. 12 is a perspective view illustrating a first example of conventional construction of a rolling bearing unit with retainer plate.
FIG. 13 is a cross-sectional view illustrating the first example of conventional construction.
FIG. 14 is a partial cross-sectional view illustrating a second example of conventional construction of a rolling bearing unit with retainer plate.
FIG. 15A and FIG. 15B illustrate the assembly process in the order of processing for the second example of conventional construction; where FIG. 15A is a partial cross-sectional view illustrating the assembled state of the retainer plate to the outer ring; and FIG. 15B is a cross-sectional view illustrating the state of forming engagement protrusions on the retainer plate by pressing the circumferential edge of the support hole on the side surface in the axial direction of the retainer plate, while at the same time making the engagement protrusions engage with the engagement groove of the outer ring.
FIG. 16A and FIG. 16B are partial cross-sectional views for explaining a problem that occurs in an assembly process of conventional construction.

### MODES FOR CARRYING OUT INVENTION

### [First Example]

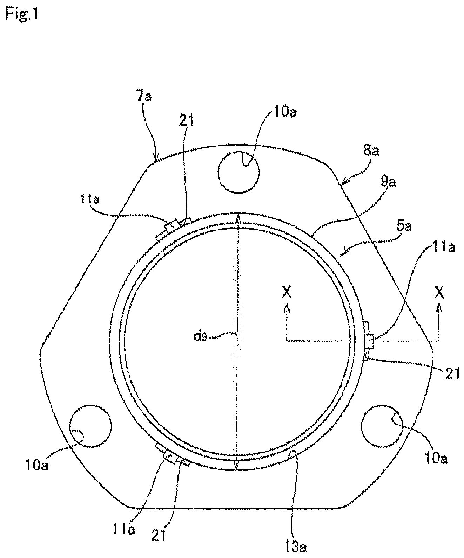

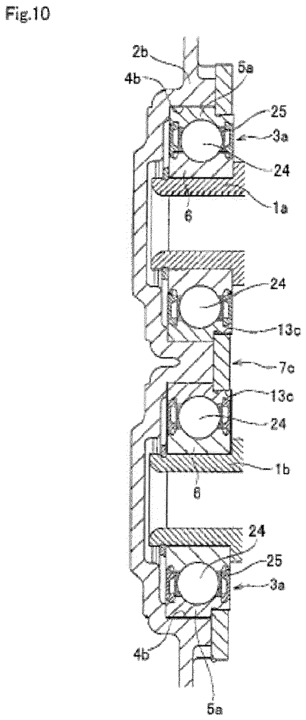

FIG. 1 to FIG. 4 illustrate a first example of an embodiment of the present invention. The rolling bearing unit with retainer plate 8a of this example is constructed by combining together a radial rolling bearing 3a (see FIG. 10) and a retainer plate 7a so that relative rotation is possible and so as not to come apart. The radial rolling bearing 3a, as in the conventional construction, has: an outer ring 5a; an inner ring 6 (see FIG. 10); and plural balls 24 as rolling bodies (see FIG. 10). The inner ring 6 is made of a hard metal such as bearing steel and formed to have a complete circular ring shape, with a single-row deep-groove inner ring raceway provided around the middle section in the axial direction of the outer-circumferential surface thereof, and arranged so as to be concentric with the outer ring 5a. The balls 24 as rolling bodies are provided between the outer ring raceway 16 of the outer ring 5a and the inner ring raceway of the inner ring 6. The present invention can be widely used in radial rolling bearing units with retainer plate regardless of the type, however, particularly, in the present invention, a single-row deep-groove ball bearing is preferably used as the radial rolling bearing 3a. The reason for this is because the dynamic torque is low, and even in the state before being assembled in the rotational-support section, none of the components become accidentally separated. The following explanation will center on the features of this example, which are the construction for the portion where the outer ring 5a of the radial rolling bearing 3a and the retainer plate 7a are combined, and the method of assembling the outer ring 5a and retainer plate 7a. The radial rolling bearing 3a preferably has a retainer 25 (see FIG. 10).

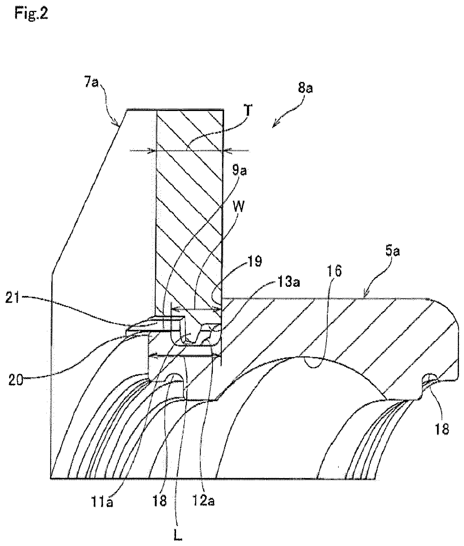

The outer ring 5a is made of a hard metal such as bearing steel and formed to have a complete circular ring shape, and a single-row deep-groove outer ring raceway 16 is formed completely around the middle section in the axial direction of the inner-circumferential surface thereof, and engagement grooves 18 in which the outer-circumferential edge of a seal ring 17 (see FIG. 14) is locked are formed on both end sections in the axial direction. Moreover, a small-diameter stepped section 9a having a diameter that is less than the outer diameter of the outer-circumferential surface of the outer ring 5a is formed all around one end section (left end section in FIG. 2 and FIG. 4) in the axial direction of the outer circumferential surface of the outer ring 5a so as to be concentric with the outer-circumferential surface of the outer ring 5a (outer-circumferential surface of the portion other than the end section in the axial direction where the small-diameter stepped section 9a is formed). A step surface 19 that extends in the radial direction of the outer ring 5a, or in other words in a direction orthogonal to the center axis of the outer ring 5a, is located between the base section in the axial direction of the small-diameter stepped section 9a (right end section in FIG. 2 and FIG. 4) and the middle section in the axial direction of the outer-circumferential surface of the outer ring 5a (portion adjacent in the axial direction to the small-diameter stepped section 9a). Moreover, an engagement groove 12a is provided all around the portion further close to the middle section in axial direction than the end section in the axial direction (left end section in FIG.2 and FIG. 4) of the outer-circumferential surface of the small-diameter stepped section 9a, or more specifically, in this example, the entire portion from the middle section in the axial direction to the base section in the axial direction of the small-diameter stepped section 9a except the end section in the axial direction of the small-diameter stepped section 9a. Therefore, an embankment shaped engagement ridge section 20 is formed all around the end section in the axial direction of the small-diameter stepped section 9a (tip end section), or in other words, the portion between the engagement groove 12a and the tip-end surface of the small-diameter stepped section 9a.

The retainer plate 7a is made of a plastically deformable metal plate such as mild steel plate and has a hexagonal shape that appears to be formed by cutting away the corners of an equilateral triangle into partial arc shapes, with one support hole 13a being provided in the center section thereof. Mounting holes 10a are provided at three locations that are uniformly spaced in the circumferential direction around the support hole 13a of the retainer plate 7a. As illustrated in FIG. 2, in this example, the thickness T of the retainer plate 7a is the same as the length L of the small-diameter stepped section 9a (T ≈ L), and greater than the width W of the engagement groove 12a (T > W).

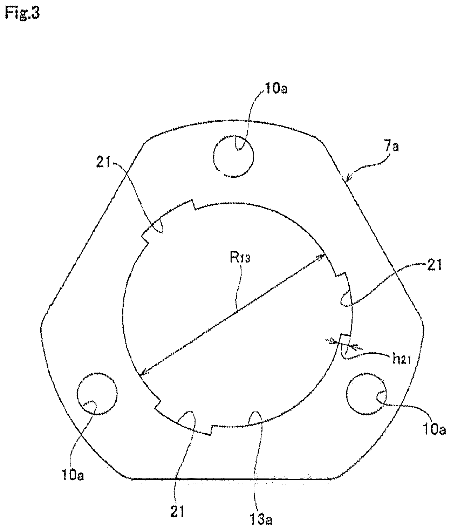

In this example, the inner diameter R₁₃ of the support hole 13a (inner diameter of the portion separated in the circumferential direction of the large-diameter section 21 that is formed in a state of being recessed toward the outside in the radial direction from the inner-circumferential edge of the support hole 13a) (see FIG. 3) is a little greater than the outer diameter dg of the small-diameter stepped section 9a (see FIG. 1 and FIG. 4), and less than the outer diameter D (see FIG. 4) of the portion of the outer ring 5a that is adjacent in the axial direction to the small-diameter stepped section 9a (d₉ < R₁₃ < D). In this way, in this example, the difference between the inner diameter R₁₃ of the support hole 13a and the outer diameter d₉ of the small-diameter stepped section 9a is small. Therefore, it is possible to suppress the amount of rotation of the retainer plate 7a with respect to the outer ring 5a, and thus the work of screwing and fastening the retainer plate 7a to the housing 2 (see FIG. 11) becomes easy, and it is possible to improve the ease of handling the rolling bearing unit with retainer plate 8a. The difference between the inner diameter R₁₃ and the outer diameter d₉ (R₁₃ - d₉) is preferably 0.01% to 2% the inner diameter R₁₃, and more preferably 0.01% to 1%. When the difference between the inner diameter R₁₃ and the outer diameter d₉ (R₁₃ - d₉) is less then 0.1% the inner diameter R₁₃, it becomes difficult for the outer ring 5a to rotate relative to the retainer plate 7a, and the ease of assembling the rolling bearing unit with retainer plate 8a decreases. On the other hand, when the difference between the inner diameter R₁₃ and the outer diameter d₉ (R₁₃ - d₉) is greater then 2% the inner diameter R₁₃, it becomes easy for the retainer plate 7a to rotate relative to the outer ring 5a, and it becomes difficult to align the mounting holes 10a with the screw holes or through holes of the housing 2, so the ease of assembling the rolling bearing unit with retainer plate 8a decreases.

In this example, notch shaped large diameter sections 21 are formed at three locations that are uniformly spaced in the circumferential direction of the support hole 13a in a state so as to be further recessed in a direction toward the outside in the radial direction than the adjacent portions in the circumferential direction. By causing part of the circumferential edge of these large-diameter sections 21 instead of the circumferential edge of the support hole 13a, and more specifically, the metal material (mild steel) of the retainer plate 7a to plastically deform in the near center position in the circumferential direction, engagement protrusions 11a are provided in a state so as to protrude in a direction toward the inside in the radial direction from the circumferential edge of the large-diameter sections 21. The diameter R₁₁ₐ of the inscribed circle of these engagement protrusions 11a is less than the outer diameter d₉ of the engagement ridge section 20 that is provided on the end section in the axial direction of the small-diameter stepped section 9a, and equal to or greater than the diameter d₁₂ₐ of the bottom section of the engagement groove 12a (d₁₂ₐ ≤ R₁₁ₐ < d₉), and is preferably greater than the diameter d₁₂ₐ (d₁₂ₐ < R₁₁ₐ < d₉).

The outer ring 5a that is provided with a small-diameter stepped section 9a (engagement ridge section 20 and engagement groove 12a), and the retainer plate 7a that has large-diameter sections 21 and engagement protrusions 11a are fitted together so that relative rotation is possible and so as not to come apart by causing the engagement protrusions 11a to engage with the engagement groove 12a. In other words, the engagement protrusions 11a are caused to engage with the engagement groove 12a so that relative rotation is possible, and the portion close to the inner diameter of the one side surface in the axial direction of the retainer plate 7a (surface on the right side in FIG. 2 and FIG. 4) is caused to engage with the step surface 19. In this state, displacement toward the left in FIG. 2 of the retainer plate 7a with respect to the outer ring 5a is prevented by the engagement between the engagement protrusions 11a and the engagement ridge section 20. On the other hand, displacement toward the right in FIG. 2 is prevented by engagement between the portion close to the inner diameter of the one side surface in the axial direction of the retainer plate 7a and the stepped surface 19. Moreover, it becomes possible to secure the outer ring 5a by the retainer plate 7a. The thickness T₁₁ₐ of the engagement protrusions 11a in the axial direction with regard to the retainer plate 7a and outer ring 5a is less than the width W of the engagement groove 12a (T₁₁ₐ < W). Furthermore, in a state in which the outer ring 5a and retainer plate 7a are concentrically arranged, there is a minute space between the tip ends (inside ends in the radial direction) of the engagement protrusions 11a and the bottom surface of the engagement groove 12a. Therefore, the outer ring 5a and the retainer plate 7a are combined such that relative rotation is possible and so as not to come apart. In this example, an engagement groove 12a is provided around the enter circumference, however, alternatively, it is also possible to provide engagement grooves that extend in the circumferential direction at plural locations at positions that are aligned with the large-diameter sections 21a. In this case, preferably the length of the engagement grooves is equal to or greater than the length of the large-diameter sections 21.

In this example, the mounting holes 10a are provided at three locations that are uniformly spaced in the circumferential direction around the support hole 13a. The diameter of the inscribed circle of these mounting holes 10a is larger than the outer diameter of the outer ring 5a. Therefore, the bolts or studs that are inserted through these mounting holes 10a do not interfere with part of the outer ring 5a. The mounting holes 10a should be provided at plural locations in the circumferential direction (two locations or more), and preferably should be provided at plural locations that are uniformly spaced in the circumferential direction, and it is possible to provide the mounting holes 10a at four or more locations that are uniformly spaced in the circumferential direction, however, in order to perform the function of installing the rolling bearing unit with retainer plate 8a inside a housing 2 (see FIG. 11), providing mounting holes 10a at three locations that are uniformly spaced in the circumferential direction is sufficient.

The work of combining the retainer plate 7a with the outer ring 5a is performed as described below. First, as illustrated in FIG. 4A, the small-diameter stepped section 9a of the outer ring 5a is fitted inside the support hole 13a of the retainer plate 7a. In this state, the supporting surface of a restraining jig 22 is brought into contact with the portion of the one side surface in the axial direction of the retainer plate 7a that is more on the outside in the radial direction than the outer ring 5a (the intermediate portion in the radial direction of the retainer plate 7a). The step surface 19 of the outer ring 5a and the one side surface in the axial direction of the retainer plate 7a are separated a little so that the thrust load that will be applied to the retainer plate 7a during processing of the engagement protrusions 11a is not applied to the outer ring 5a. However, in the case where the strength and rigidity in the axial direction of the outer ring are sufficiently high, a restraining jig does not absolutely have to be used. In other words, in that case, it is also possible to form the engagement protrusions in a state in which, of both end surfaces in the axial direction of the outer ring, the end surface on the opposite side from where the small-diameter stepped section is located is brought into contact with the supporting surface of a receiving tool.

Next, as illustrated in FIG. 4B, in part of the other side surface in the axial direction of the retainer plate 7a (surface on the left side in FIG. 2 and FIG. 4), the tip-end surface of a punch 23 that is provided with protrusions at three location that are uniformly spaced in the circumferential direction strikes against part (center position in the circumferential direction) of the circumferential edge of the large diameter sections 21. When doing this, the edge of the end on the inner-diameter side of the punch protrudes further inward in the radial direction than the circumferential edges of the large-diameter sections 21. From this state, the punch 23 is pressed toward the step surface 19, and strongly presses the center positions in the circumferential direction of the circumferential edges of the large-diameter sections 21 of the retainer plate 7a. Then, as illustrated in FIG. 4B and FIG. 4C, by moving (plastically deforming) the metal material located on the circumferential edges of the large-diameter sections 21 inward in the radial direction, the engagement protrusions 11a are formed, while at the same time, the engagement protrusions 11a are made to engage with the engagement groove 12a.

All or a large part of the processing load that is applied to the retainer plate 7a during processing of the engagement protrusions 11a is supported by the restraining jig 22 and not applied to the outer ring 5a, so even when the strength and rigidity of the outer ring 5a is not particularly large, damage such as deformation of the outer ring 5a does not occur. Moreover, of the support hole 13a, the inner diameter R₁₃ of the portion separated from the large-diameter holes 21 is a little larger than the outer diameter dg of the small-diameter stepped section 9a, so when the outer ring 5a and retainer plate 7a are combined together, there is hardly any looseness in the radial direction. Processing of the engagement protrusions 11a is performed in a state in which only the outer ring 5a and retainer plate 7a are combined, so handling is easy, and there is no possibility of damage to other parts of the radial rolling bearing 3. Furthermore, in this example, the outer ring 5a and the retainer plate 7a are directly combined, so the cost of manufacturing parts, the cost of managing parts, and the cost of assembly can all be suppressed, and thus it is possible to lower the cost of the rolling bearing with retainer plate 8a.

The engagement protrusions 11a are formed by plastically deforming the circumferential edges of the large-diameter sections 21 inward in the radial direction, however, the diameter R₂₁ of the inscribed circle of the large-diameter sections 21 is greater than the outer diameter dg of the engagement ridge section 20 by two times or more than the height h₂₁ in the radial direction of the stepped section between the portions of the support hole 13a that are separated from the large-diameter sections 21 and the large-diameter sections 21 (d₉ + 2h₂₁ < R₂₁). In this example, the diameter R₁₁ₐ of the inscribed circle of the engagement protrusions 11a being less than the outer diameter d₉ of the engagement ridge section 20 occurs during the processing illustrated in FIG. 4B to FIG. 4C after the processing of the engagement protrusions 11a has proceeded to a certain extent. Therefore, by appropriately regulating the relationship between the height h₂₁ in the radial direction of the stepped section between the portions of the support hole 13a that are separated from the large-diameter sections 21 and the large-diameter sections 21 and the width W₂₀ in the axial direction of the engagement ridge section 20, as illustrated in FIG. 4B, in the stage of processing engagement protrusions 11a, the tip ends of the engagement protrusions 11a will not come in contact with the outer-circumferential surface of the engagement ridge section 20. Moreover, as illustrated in FIG. 4C, in the state in which processing of the engagement protrusions 11a is finished, the diameter R₁₁ₐ of the inscribed circle of the engagement protrusions 11a can be made to be sufficiently smaller than the outer diameter d₉ of the engagement ridge section 20.

Therefore, during any stage when engaging the engagement protrusions 11a on the inner-circumferential edge of the retainer plate 7a with the engagement groove 12a that is formed around the outer-circumferential surface of the small-diameter stepped section 9a of the outer ring 5a, force is not applied to the small-diameter stepped section 9a in the inward radial direction. Consequently, harmful deformation of the outer ring 5a does not occur, and it is possible to suppress the occurrence of bad parts, thus it is possible to improve the yield of the rolling bearing unit with retainer plate 8a. The height h₂₁ in the radial direction of the stepped section is 0.1% to 10%, and more preferably 0.5% to 5% the inner diameter R₁₃ₐ. When the height h₂₁ in the radial direction is less than 0.1% the inner diameter R₁₃ₐ, there is a possibility that the tip-end sections of the engagement protrusions 11a will interfere with the outer-circumferential surface of the engagement ridge section 20 when processing the engagement protrusions 11a. On the other hand, when the height h₂₁ in the radial direction is greater than 10% the inner diameter R₁₃ₐ, the state of engagement between the engagement protrusions 11a and the engagement ridge section 20 is insufficient, and there is a possibility that the outer ring 5a will fall off of the retainer plate 7a. Moreover, the width W₂₀ in the axial direction of the engagement ridge section 20 is 10% to 60%, and more preferably 20% to 50% the length L in the axial direction of the small-diameter stepped section 9a (thickness T of the retainer plate 7a). When the width W₂₀ in the axial direction of the engagement ridge section 20 is less than 10% the length L in the axial direction of the small-diameter stepped section 9a, there is a possibility that the strength of the engagement ridge section 20 will not be sufficiently maintained. On the other hand, when the width W₂₀ in the axial direction of the engagement ridge section 20 is greater than 60% the length L in the axial direction of the small-diameter stepped section 9a, the width of the engagement groove 12a is then too small, and there is a possibility that there will be interference between the side surface of the engagement groove 12a and the engagement protrusions 11a. The other parts of this example are the same as those of the conventional construction.

### [Second Example]

FIG. 5 illustrates a second example of an embodiment of the present invention. In this example, performing the work of forming the engagement protrusions 11b around the circumferential edges of the large-diameter sections 21 of the support hole 13a of the retainer plate 7a is divided into two steps.

In other words, in this example, first, as illustrated in FIG. 5A, a first punch 26 that is wedge shaped on the tip end is pressed against the circumferential edges of the large-diameter sections 21 of the other side surface in the axial direction of the retainer plate 7a. Then as illustrated in FIG. 5B, V-shaped concave grooves 27 are formed in the edges of the large-diameter sections 21 so that the width dimension in the radial direction of the opening section on the other side surface in the axial direction of the retainer plate 7a is wide and the width dimension becomes narrow going toward the back. At the same time as this, the portions further on the inside in the radial direction than the concave grooves 27 are plastically deformed to form raw engagement sections 28 that are further on the inside in the radial direction than the concave grooves 27.

After that, the first punch 26 is removed from the concave grooves 27, and as illustrated in FIG. 5C and FIG. 5D, a second punch 29 having a flat tip-end surface is pressed inside the concave grooves 27 and plastically deforms the raw engagement protrusions 28, which are the portions located further on the inside in the radial direction than the concave grooves 27, further inward in the radial direction. Then, at the same time as forming the engagement protrusions 11b, the engagement protrusions 11b are caused to engage with the engagement groove 12a that is provided on the outer ring 5a side.

In this example, by dividing the processing of the engagement protrusions 11b into two steps that include a process that uses a wedge-shaped first punch 26, it is possible to reduce the load that is applied to the retainer plate 7a during this processing. Therefore, it is also possible to omit the use of a restraining jig 22. However, by using a restraining jig in this case as well, it is possible to more certainly prevent deformation of the outer ring. The other parts are the same as in the first example of an embodiment.

### [Third Example]

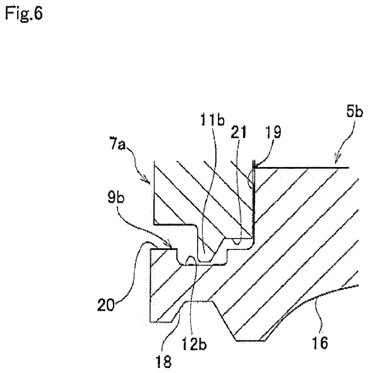

FIG. 6 illustrates a third example of an embodiment of the present invention. In this example, an engagement groove 12b is provided around the entire middle section in the axial direction of a small-diameter stepped section 9b that is provided on the outer ring 5b side (portion except end section in the axial direction and base section in the axial direction of the small-diameter stepped section 9b). With this kind of construction, the thickness in the radial direction of the base section in the axial direction of the small-diameter stepped section 9b is maintained, and thus it is possible to improve the strength and rigidity of the portion on one end section in the axial direction of the outer ring 5b where the small-diameter stepped section 9b is formed. The other parts are the same as in the first example of an embodiment.

### [Fourth Example]

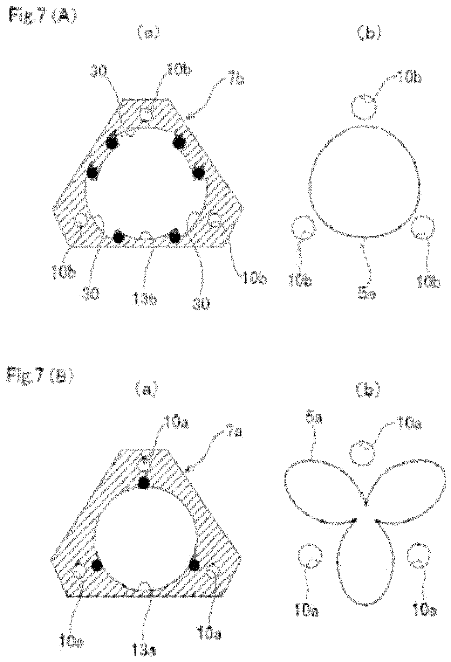

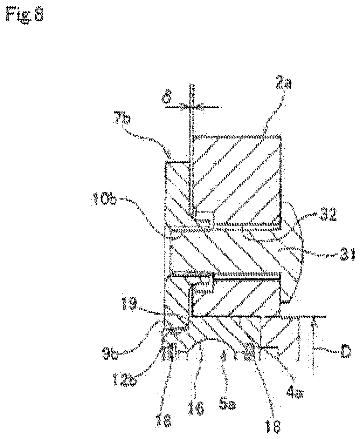

FIG. 7A(a) is a schematic diagram for explaining a fourth example of an embodiment of the present invention. In this example, notches 30 that extend in the circumferential direction are formed in part of the inner-circumferential edge of a support hole 13b that is provided in the center section of a retainer plate 7b in portions where the phase in the circumferential direction coincides with that of mounting holes 10b. The diameter R₃₀ of the circumscribed circle of these notches 30 is greater than the outer diameter D (see FIG. 8) of the outer-circumferential surface of the outer ring 5a (portion of the outer ring 5a that is adjacent in the axial direction to the small-diameter stepped section 9a) (D < R₃₀). Therefore, the side surface of the retainer plate 7b and the step surface 19 (see FIG. 8) that is located on the outer-circumferential surface of the outer ring 5a come in contact only in the portions between the notches 30, and do not come in contact in the portions where the notches 30 are formed. In other words, the portions close to the inner diameter of the one side surface in the axial direction of the retainer plate 7b and the step surface 19 only engage with the portions where the phase in the circumferential direction differs from that of the mounting holes 10b. In the case of embodying the construction of this example, plural large-diameter sections and engagement protrusions (all are omitted in the figures) that are provided around the inner-circumferential edge of the support hole 13b are formed in portions that are separated from the notches 30 in the circumferential direction. Alternatively, as long as it is possible to maintain the amount of plastic deformation when forming the engagement protrusions, it is also possible to use the notches 30 as large-diameter sections.

In this example, by providing notches 30 on the retainer plate 7b, it is possible to suppress worsening of the roundness of the outer ring 5a that is caused by joining and fastening plural locations in the circumferential direction of the retainer plate 7b (three locations in the example in the figures) to the housing 2a using plural bolts 31.

In other words, in order to assemble the outer ring 5a in the housing 2a, the outer ring 5a fits inside a concave retaining section 4a of the housing 2a, and the surface on the end in the axial direction of the outer ring 5a is brought into contact with the surface of the back end of the concave retaining section 4a. Moreover, the portion close to the inner diameter of the one side surface in the axial direction of the retainer plate 7b (surface on the right side in FIG. 8) is brought into contact with the step surface 19 that is formed on the outer-circumferential surface of the outer ring 5a. In this state, there is a gap δ between one surface in the axial direction of the housing 2a (surface on the left side in FIG. 8) and the one side surface in the axial direction of the retainer plate 7b. This gap is necessary for supporting the outer ring 5a by the housing 2a by tightening bolts 31 so that there is no looseness.

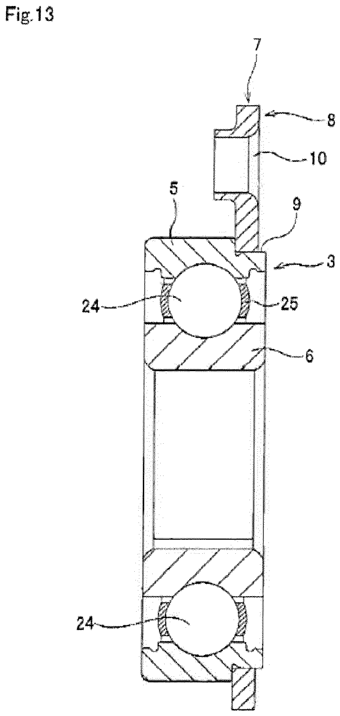

The gap δ is eliminated by inserting bolts 31 into through holes 32 that are provided in the housing 21, and then screwing the bolts into the mounting holes 10b and tightening. When doing this, the step surface 19 is pressed by the portion close to the inner diameter of the one side surface in the axial direction of the retainer plate 7b, however, the force by which the step surface 19 is pressed is not uniform in the circumferential direction. For example, as illustrated in FIG. 7B(a), when using a retainer plate 7a in which a simple circular support hole 13a is used, the force by which the step surface 19 is pressed becomes stronger in portions indicated by the black dots in FIG. 7B(a) that are close to the mounting holes 10a where the phase in the circumferential direction coincides with the mounting holes 10a than in other portions. As a result, the roundness of the outer ring 5a that has the step surface 19 worsens as exaggeratedly illustrated in FIG. 7B(b). There is a possibility that this worsening of the roundness of the outer ring 5a will be connected to worsening of the noise characteristics and durability of the radial rolling bearing in which the outer ring 5a is assembled (see FIG. 13 and FIG. 14).

On the other hand, with the construction of this example illustrated in FIG. 7A(a), the portion close to the inner diameter of the side surface in the axial direction of the retainer plate 7b strongly presses the step surface 19 by the portions that are separated in the circumferential direction from the mounting holes 10b as indicated by the black dots in FIG. 7A(a) due to the existence of the notches 30. Moreover, the number of locations that are strongly pressed becomes double that of the mounting holes 10b (6 locations). As a result, the distribution of the force by which the step surface 19 is pressed becomes nearly uniform, and the worsening of the roundness of the outer ring 5a due to tightening of the bolts 31 is lessened. Consequently, as illustrated in FIG. 7A(b) it is possible to suppress worsening of the roundness of the outer ring 5a even in a state in which the outer ring 5a is fastened to the housing 2 by tightening bolts 31, and thus it is possible to prevent worsening of the noise characteristics and durability of the radial rolling bearing in which the outer ring 5a is assembled. When combining the retainer plate 7b and outer ring 5a, it is possible to use the construction of anyone of the first through third examples of an embodiment of the present invention.

### [Fifth Example]

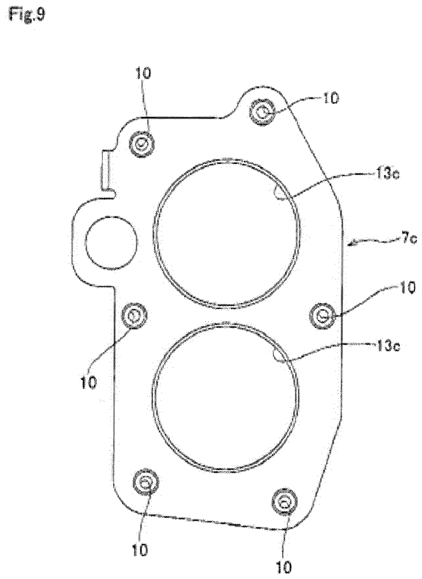

FIG. 9 and FIG. 10 illustrate a fifth example of an embodiment of the present invention. In this example, plural support holes 13c (two locations in the example in the figures) are provided in one retainer plate 7c. Outer rings 5a are assembled on the inner side of each of the support holes 13c such that a little relative displacement in the radial direction of the support holes 13c is possible. The radial rolling bearing 3a respectively provided with the outer rings 5a support the tip ends of separate rotating shafts 1a, 1b so as to be able to rotate freely with respect to the housing 2b.

In the case of the construction of this example, the retainer plate is not able to rotate with respect to the outer rings 5a, however, it is possible to absorb shifting between the pitch of the support holes 13c, and the pitch of concave support sections 4b that are provided in the housing 2b. In other words, the outer rings 5a are fitted so there is no looseness by fitting the outer rings 5a in the concave support sections 4b with a light interference fit, and when assembling the outer rings 5a on the inside of the support holes 13c so that relative displacement is not possible in the radial direction, it is necessary for the pitch of the support holes 13c to coincide exactly. On the other hand, with the construction of the present invention (refer to the first through third examples of an embodiment of the present invention), not only is it possible to support the outer rings on the inner-diameter side of the support holes so that rotation is possible, a little relative displacement in the radial direction is also possible. Therefore, by using the construction of the present invention, it is not necessary for the pitch of the support holes 13c to coincide exactly, and thus it is possible to suppress the manufacturing cost, and it is possible to simplify the work of assembling the outer rings 5a in the concave support section 4b. In this example as well, it is possible to use any of the first through third examples of an embodiment of the present inveniton.

### [Industrial Application]

The rolling bearing unit with retainer plate of the present invention can be suitably applied to the case of rotatably supporting the end section of a rotating shaft on the inside surface of a housing in an automobile transmission that includes both a manual transmission and automatic transmission.

### [Explanation of Reference Numbers]

- 1, 1a, 1b: Rotating shaft
- 2, 2a: Housing
- 3, 3a: Radial rolling bearing
- 4, 4a, 4b: Concave support section
- 5, 5a, 5b: Outer ring
- 6: Inner ring
- 7, 7a, 7b, 7c: Retainer plate
- 8, 8a: Rolling bearing unit with retainer plate
- 9, 9a, 9b: Small-diameter stepped section
- 10, 10a, 10b: Mounting hole
- 11, 11a, 11b: Engagement protrusion
- 12, 12a, 12b: Engagement groove
- 13, 13a, 13b, 13c: Support hole
- 14: Minute gap
- 15: Punch
- 16: Outer ring raceway
- 17: Seal ring
- 18: Engagement groove
- 19: Step surface
- 20: Engagement ridge section
- 21: Large-diameter section
- 22: Restraining jig
- 23: Punch
- 24: Ball
- 25: Retainer
- 26: First punch
- 27: Concave groove
- 28: Raw engagement protrusion
- 29: Second punch
- 30: Notch
- 31: Bolt
- 32: Through hole

## Claims

1. A rolling bearing unit with retainer plate comprising:
an outer ring (5a, 5b) having an outer ring raceway around an inner-circumferential surface thereof;
an inner ring (6) arranged to be concentric with the outer ring (5a, 5b) and having an inner ring raceway around an outer-circumferential surface thereof;
plural rolling bodies (24) provided between the outer ring raceway and the inner ring raceway to rotate freely; and
a retainer plate (7a-7c) having a support hole (13a-13c) and plural mounting holes (10, 10a, 10b) that are provided around the support hole (13a-13c),
the outer ring (5a, 5b) further having: a small-diameter stepped section (9a, 9b) that is provided completely around one end section in an axial direction of an outer-circumferential surface of the outer ring (5a, 5b); and an engagement groove (12a, 12b) that is provided around a portion further close to a middle in the axial direction than an end section in the axial direction of the small-diameter stepped section (9a, 9b) to extend in a circumferential direction of the outer ring (5a, 5b), wherein the support hole (13a-13c) of the retainer plate (7a-7c) has an inner diameter that is larger than an outer diameter of the small-diameter stepped section (9a, 9b), and that is less than an outer diameter of a portion of the outer-circumferential surface of the outer ring (5a, 5b) that is adjacent in the axial direction to the small-diameter stepped section (9a, 9b)
**characterized in that**
the support hole (13a-13c) has large-diameter sections (21) that are recessed outward in a radial direction of an inner-circumferential edge of the support hole (13a-13c) and that are provided at plural locations in a circumferential direction of the support hole (13a-13c),
engagement protrusions (11a, 11b) are provided on parts of the circumferential edges of the large-diameter sections (21) to protrude inward in the radial direction from the circumferential edge of the large-diameter sections (21), and a diameter of an inscribed circle of the engagement protrusions (11a, 11b) is less than the outer diameter of the end section in the axial direction of the small-diameter stepped section (9a, 9b), and equal to or greater than a diameter of a bottom section of the engagement groove (12a, 12b), and
the outer ring (5a, 5b) and the retainer plate (7a-7c) are combined not to come apart by the engagement protrusions (11a, 11b) engaging with the engagement groove (12a, 12b) to be movable relatively to each other in the circumferential direction.

2. The rolling bearing unit with retainer plate according to Claim 1, wherein the large-diameter sections (21) and the engagement protrusions (11a, 11b) are provided at three or more locations that are uniformly spaced in the circumferential direction.

3. The rolling bearing unit with retainer plate according to Claim 1, wherein, the engagement groove (12a) is provided completely around the small-diameter stepped section (9a) in a portion in the axial direction except the end section in the axial direction of the small-diameter stepped section (9a), the portion being from the middle section in the axial direction to a base section in the axial direction of the small-diameter stepped section (9a).

4. The rolling bearing unit with retainer plate according to Claim 1, wherein, the engagement groove (12b) is provided completely around the small-diameter stepped section (9b) in a portion in the axial direction except the end section in the axial direction and a base section in the axial direction of the small-diameter stepped section (9b), the portion being the middle section in the axial direction.

5. The rolling bearing unit with retainer plate according to Claim 1, wherein, the support hole (13b) further has notches (30) that extend in the circumferential direction, a diameter of a circumscribed circle of the notches (30) being greater than the outer diameter of the outer ring (5a, 5b), in portions of the inner-circumferential edge, with a phase in the circumferential direction of the portions of the inner-circumferential edge coinciding with a phase of the plural mounting holes (10b), and portions close to the inner diameter of one side surface in the axial direction of the retainer plate (7b) and a step surface that extends in the radial direction between the outer-circumferential surface of the outer ring (5a, 5b) and the base section of the small-diameter stepped section (9a, 9b) engage at positions, with a phase in the circumferential direction of the portions close to the inner diameter differs from the phase of the plural mounting holes (10b).

6. The rolling bearing unit with retainer plate according to Claim 1, wherein, only one support hole (13a, 13b) is provided in the retainer plate (7a, 7b), and the outer ring (5a, 5b) and the retainer plate (7a, 7b) are combined such that relative displacement in the circumferential direction of the outer ring (5a, 5b) is possible.

7. The rolling bearing unit with retainer plate according to Claim 1, wherein, plural support holes (13c) are provided in the retainer plate (7c), and the outer ring (5a, 5b) and the retainer plate (7c) are combined such that that relative displacement in the radial direction of the support holes (13c) is possible.

8. The rolling bearing unit with retainer plate according to Claim 1, wherein, the diameter of an inscribed circle of the mounting holes (10, 10a, 10b) of the retainer plate (7a-7c) is greater than the outer diameter of the outer ring (5a, 5b).

9. A manufacturing method for manufacturing the rolling bearing unit with retainer plate according to Claim 1, comprising a step of:
plastically deforming the parts of the circumferential edge of the large-diameter sections (21) on another side surface in the axial direction of the retainer plate (7a-7c) inward in the radial direction to form the engagement protrusions (11a, 11b), by pressing the parts of the circumferential edge of the large-diameter sections (21) toward a step surface that extends in the radial direction between the outer-circumferential surface of the outer ring (5a, 5b) and a base section of the small-diameter stepped section (9a, 9b) of the outer ring (5a, 5b), with the small-diameter stepped section (9a, 9b) fitted inside the support hole (13a-13c) of the retainer plate (7a-7c) before the engagement protrusions (11a, 11b) are formed, combining the outer ring (5a, 5b) and the retainer plate (7a-7c) by engaging the engagement protrusions (11a, 11b) with the engagement groove (12, 12b).

10. The manufacturing method for a rolling bearing unit with retainer plate according to Claim 9, wherein the engagement protrusions (11b) are formed by pressing a wedge-shaped first punch (26) against the parts of the circumferential edges of the large-diameter sections (21) of the other side surface in the axial direction of the retainer plate (7a) before the engagement protrusions (11b) are formed to form V-shaped concave grooves (27) that open on the other side surface in the axial direction of the retainer plate (7a), causing portions of the parts of the circumferential edges of the large-diameter sections (21) that are located further on an inside in the radial direction than the concave grooves (27) to plastically deform inward in the radial direction, and then by pressing a second punch (29) inside the concave grooves (27) causing the portions that are located further on the inside in the radial direction than the concave grooves (27) to plastically deform further in the radial direction.

11. The manufacturing method for a rolling bearing unit with retainer plate according to Claim 9, wherein a restraining jig (22) is arranged around the outer ring (5a, 5b) to surround the outer ring (5a, 5b), and by supporting an intermediate portion in the radial direction of one side surface in the axial direction of the retainer plate (7a-7c) with the restraining jig (22) when forming the engagement protrusions (11a, 11b), a processing load is prevented from being applied to the outer ring (5a, 5b).

## Patentansprüche

1. Wälzlagereinheit mit Halteplatte, umfassend:
einen Außenring (5a, 5b), der eine Außenringlaufbahn um eine Innenumfangsfläche davon aufweist;
einen Innenring (6), der angeordnet ist, um konzentrisch mit dem Außenring (5a, 5b) zu sein, und eine Innenringlaufbahn um eine Außenumfangsfläche davon aufweist;
mehrere Wälzkörper (24), die zwischen der Außenringlaufbahn und der Innenringlaufbahn zum freien Drehen vorgesehen sind; und
eine Halteplatte (7a-7c) aufweisend ein Tragloch (13a-13c) und mehrere Montagelöcher (10, 10a, 10b), die um das Tragloch (13a-13c) bereitgestellt sind,
wobei der Außenring (5a, 5b) ferner Folgendes aufweist: einen abgestuften Bereich kleinen Durchmessers (9a, 9b), der vollständig um einen Endbereich in einer Axialrichtung einer Außenumfangsfläche des Außenrings (5a, 5b) bereitgestellt ist; und eine Eingriffsnut (12a, 12b), die um einen Abschnitt näher einer Mitte in der Axialrichtung als ein Endbereich in der Axialrichtung des abgestuften Bereichs kleinen Durchmessers (9a, 9b) bereitgestellt ist, um in einer Umfangsrichtung des Außenrings (5a, 5b) zu verlaufen,
worin das Tragloch (13a-13c) der Halteplatte (7a-7c) einen Innendurchmesser aufweist, der größer ist als ein Außendurchmesser des abgestuften Bereichs kleinen Durchmessers (9a, 9b) und der weniger ist als ein Außendurchmesser eines Abschnitts der Außenumfangsfläche des Außenrings (5a, 5b), der in der Axialrichtung dem abgestuften Bereich kleinen Durchmessers (9a, 9b) benachbart ist, **dadurch gekennzeichnet, dass** das Tragloch (13a-13c) Bereiche großen Durchmessers (21) aufweist, die nach außen in einer Radialrichtung einer Innenumfangskante des Traglochs (13a-13c) vertieft sind und die an mehreren Stellen in einer Umfangsrichtung des Traglochs (13a-13c) bereitgestellt sind,
Eingriffsvorsprünge (11a, 11b) an Teilen der Umfangskanten der Bereiche großen Durchmessers (21) bereitgestellt sind, um nach innen in der Radialrichtung aus der Umfangskante der Bereiche großen Durchmessers (21) hervorzustehen, und ein Durchmesser eines Inkreises der Eingriffsvorsprünge (11a, 11b) weniger als der Außendurchmesser des Endbereichs in der Axialrichtung des abgestuften Bereichs kleinen Durchmessers (9a, 9b) und gleich einem oder größer als ein Durchmesser eines unteren Bereichs der Eingriffsnut (12a, 12b) ist, und
der Außenring (5a, 5b) und die Halteplatte (7a-7c) kombiniert sind, um nicht dadurch auseinanderzugehen, dass die Eingriffsvorsprünge (11a, 11b) in die Eingriffsnut (12a, 12b) eingreifen, um in der Umfangsrichtung relativ zueinander bewegbar zu sein.

2. Wälzlagereinheit mit Halteplatte nach Anspruch 1, worin die Bereiche großen Durchmessers (21) und die Eingriffsvorsprünge (11a, 11b) an drei oder mehr Stellen, die in der Umfangsrichtung gleichmäßig beabstandet sind, bereitgestellt sind.

3. Wälzlagereinheit mit Halteplatte nach Anspruch 1, worin die Eingriffsnut (12a) vollständig um den abgestuften Bereich kleinen Durchmessers (9a) in einem Abschnitt in der Axialrichtung außer dem Endbereich in der Axialrichtung des abgestuften Bereichs kleinen Durchmessers (9a) bereitgestellt ist, wobei der Abschnitt vom mittleren Bereich in der Axialrichtung zu einem Basisbereich in der Axialrichtung des abgestuften Bereichs kleinen Durchmessers (9a) verläuft.

4. Wälzlagereinheit mit Halteplatte nach Anspruch 1, worin die Eingriffsnut (12b) vollständig um den abgestuften Bereich kleinen Durchmessers (9b) in einem Abschnitt in der Axialrichtung außer dem Endbereich in der Axialrichtung und einem Basisbereich in der Axialrichtung des abgestuften Bereichs kleinen Durchmessers (9b) bereitgestellt ist, wobei der Abschnitt der mittlere Bereich in der Axialrichtung ist.

5. Wälzlagereinheit mit Halteplatte nach Anspruch 1, worin das Tragloch (13b) ferner Kerben (30) aufweist, die in der Umfangsrichtung verlaufen, wobei ein Durchmesser eines Umkreises der Kerben (30) größer ist als der Außendurchmesser des Außenrings (5a, 5b), in Abschnitten der Innenumfangskante, wobei eine Phase in der Umfangsrichtung der Abschnitte der Innenumfangskante mit einer Phase der mehreren Montagelöcher (10b) zusammenfällt, und Abschnitte nahe dem Innendurchmesser einer Seitenfläche in der Axialrichtung der Halteplatte (7b) und eine Stufenfläche, die in der Radialrichtung zwischen der Außenumfangsfläche des Außenrings (5a, 5b) und dem Basisbereich des abgestuften Bereichs kleinen Durchmessers (9a, 9b) verläuft, an Positionen eingreifen, wobei sich eine Phase in der Umfangsrichtung der Abschnitte nahe dem Innendurchmesser von der Phase der mehreren Montagelöcher (10b) unterscheidet.

6. Wälzlagereinheit mit Halteplatte nach Anspruch 1, worin nur ein Tragloch (13a, 13b) in der Halteplatte (7a, 7b) bereitgestellt ist und der Außenring (5a, 5b) und die Halteplatte (7a, 7b) so kombiniert sind, dass Relativverschiebung in der Umfangsrichtung des Außenrings (5a, 5b) möglich ist.

7. Wälzlagereinheit mit Halteplatte nach Anspruch 1, worin mehrere Traglöcher (13c) in der Halteplatte (7c) bereitgestellt sind und der Außenring (5a, 5b) und die Halteplatte (7c) so kombiniert sind, dass Relativverschiebung in der Radialrichtung der Traglöcher (13c) möglich ist.

8. Wälzlagereinheit mit Halteplatte nach Anspruch 1, worin der Durchmesser eines Inkreises der Montagelöcher (10, 10a, 10b) der Halteplatte (7a-7c) größer ist als der Außendurchmesser des Außenrings (5a, 5b).

9. Herstellungsverfahren zur Herstellung der Wälzlagereinheit mit Halteplatte nach Anspruch 1, umfassend einen Schritt des:
plastischen Verformens der Teile der Umfangskante der Bereiche großen Durchmessers (21) auf einer anderen Seitenfläche in der Axialrichtung der Halteplatte (7a-7c) nach innen in der Radialrichtung zum Bilden der Eingriffsvorsprünge (11a, 11b) durch Pressen der Teile der Umfangskante der Bereiche großen Durchmessers (21) hin zu einer Stufenfläche, die in der Radialrichtung zwischen der Außenumfangsfläche des Außenrings (5a, 5b) und einem Basisbereich des abgestuften Bereichs kleinen Durchmessers (9a, 9b) des Außenrings (5a, 5b) verläuft, wobei der abgestufte Bereich kleinen Durchmessers (9a, 9b) innen im Tragloch (13a-13c) der Halteplatte (7a-7c) eingebaut wird, bevor die Eingriffsvorsprünge (11a, 11b) gebildet werden, wobei der Außenring (5a, 5b) und die Halteplatte (7a-7c) durch Eingriff der Eingriffsvorsprünge (11a, 11b) in die Eingriffsnut (12, 12b) kombiniert werden.

10. Herstellungsverfahren für eine Wälzlagereinheit mit Halteplatte nach Anspruch 9, worin die Eingriffsvorsprünge (11b) durch Pressen eines keilförmigen ersten Stempels (26) gegen die Teile der Umfangskanten der Bereiche großen Durchmessers (21) der anderen Seitenfläche in der Axialrichtung der Halteplatte (7a) gebildet werden, bevor die Eingriffsvorsprünge (11b) gebildet werden, um V-förmige konkave Nuten (27) zu bilden, die sich auf der anderen Seitenfläche in der Axialrichtung der Halteplatte (7a) öffnen, wodurch bewirkt wird, dass Abschnitte der Teile der Umfangskanten der Bereiche großen Durchmessers (21), die weiter auf einer Innenseite in der Radialrichtung als die konkaven Nuten (27) befindlich sind, sich nach innen in der Radialrichtung plastisch verformen, und anschließend durch Pressen eines zweiten Stempels (29) innen in den konkaven Nuten (27), wodurch bewirkt wird, dass sich die Abschnitte, die weiter auf der Innenseite in der Radialrichtung als die konkaven Nuten (27) befindlich sind, in der Radialrichtung weiter plastisch verformen.

11. Herstellungsverfahren für eine Wälzlagereinheit mit Halteplatte nach Anspruch 9, worin eine Rückhaltevorrichtung (22) um den Außenring (5a, 5b) angeordnet ist, um den Außenring (5a, 5b) zu umgeben und, durch Abstützen eines Zwischenabschnitts in der Radialrichtung einer Seitenfläche in der Axialrichtung der Halteplatte (7a-7c) mit der Rückhaltevorrichtung (22) beim Bilden der Eingriffsvorsprünge (11a, 11b), das Anwenden einer Verarbeitungslast auf den Außenring (5a, 5b) verhindert wird.

## Revendications

1. Une unité de palier à roulement avec plaque de retenue comprenant :
une bague extérieure (5a, 5b) dotée d'un chemin de roulement de bague extérieure autour d'une surface circonférentielle intérieure de celle-ci ;
une bague intérieure (6) disposée pour être concentrique avec la bague extérieure (5a, 5b) et dotée d'un chemin de roulement de bague intérieure autour d'une surface circonférentielle extérieure de celle-ci ;
des corps roulants multiples (24) prévus entre le chemin de roulement de la bague extérieure et le chemin de roulement de la bague intérieure pour tourner librement ; et
une plaque de retenue (7a-7c) dotée d'un trou de support (13a-13c) et de plusieurs trous de montage (10, 10a, 10b) prévus autour du trou de support (I3a-13c),
la bague extérieure (5a, 5b) étant dotée en sus :
d'une section étagée de petit diamètre (9a, 9b) prévue complètement autour d'une section d'extrémité en direction axiale d'une surface circonférentielle extérieure de la bague extérieure (5a, 5b) ; et
une rainure d'engagement (12a, 12b) prévue autour d'une partie plus proche d'un milieu en direction axiale qu'une section en direction axiale de la direction de la section étagée de petit diamètre (9a, 9b) pour s'étendre en direction circonférentielle de la bague extérieure (5a, 5b),
dans laquelle le trou de support (13a-13c) de la plaque de retenue (7a-7c) a un diamètre intérieur supérieur à un diamètre extérieur de la section étagée de petit diamètre (9a, 9b), et inférieur à un diamètre extérieur d'une partie de la surface circonférentielle extérieure de la bague extérieure (5a, 5b) qui est adjacente en direction axiale à la section étagée de petit diamètre (9a, 9b)
**caractérisée en ce que** le trou de support (13a-13c) est doté de sections de grand diamètre (21) faisant saillie vers l'extérieur en direction radiale d'un bord circonférentiel intérieur du trou de support (I3a- 13c) et qui sont prévues en plusieurs emplacements en direction circonférentielle du trou de support (I3a-13c),
des protubérances d'engagement (11a, 11b) étant prévues dans des parties des bords circonférentiels des sections de grand diamètre (21) pour faire saillie vers l'intérieur en direction radiale depuis le bord circonférentiel des sections de grand diamètre (21), et un diamètre d'un cercle inscrit des protubérances d'engagement (11a, 11b) inférieur au diamètre extérieur de la section d'extrémité en direction axiale de la section étagée de petit diamètre (9a, 9b), et égal ou supérieur à un diamètre d'une section inférieure de la rainure d'engagement (12a, 12b), et
la bague extérieure (5a, 5b) et la plaque de retenue (7a-7c) sont combinées pour ne pas être séparées par les protubérances d'engagement (11a, 11b) s'engageant avec la rainure d'engagement (12a, 12b) pour être mobiles l'une par rapport à l'autre en direction circonférentielle.

2. L'unité de palier à roulement avec plaque de retenue selon la revendication 1, dans laquelle les sections de grand diamètre (21) et les protubérances d'engagement (11a, 11b) sont prévues à trois emplacements ou plus qui sont espacés uniformément en direction circonférentielle.

3. L'unité de palier à roulement avec plaque de retenue selon la revendication 1, dans laquelle la rainure d'engagement (12a) est prévue complètement autour de la section étagée de petit diamètre (9a) dans une partie en direction axiale sauf la section d'extrémité en direction axiale de la section étagée de petit diamètre (9a), la partie étant depuis la section du milieu en direction axiale jusqu'à une section de base en direction axiale de la section étagée de petit diamètre (9a).

4. L'unité de palier à roulement avec plaque de retenue selon la revendication 1, dans laquelle la rainure d'engagement (12b) est prévue complètement autour de la section étagée de petit diamètre (9b) dans une partie en direction axiale sauf la section d'extrémité en direction axiale et une section de base en direction axiale de la section étagée de petit diamètre (9b), la partie étant la section du milieu en direction axiale.

5. L'unité de palier à roulement avec plaque de retenue selon la revendication 1, dans laquelle le trou de support (13b) est doté en sus d'encoches (30) qui s'étendent en direction circonférentielle, un diamètre d'un cercle circonscrit des encoches (30) étant supérieur au diamètre extérieur de la bague extérieure (5a, 5b), dans des parties du bord circonférentiel intérieur, avec une phase en direction circonférentielle des parties du bord circonférentiel intérieur coïncidant avec une phase des trous de montage multiples (10b), et des parties proches du diamètre intérieur d'une surface latérale en direction axiale de la plaque de retenue (7b) et une surface de gradin qui s'étend en direction radiale entre la surface circonférentielle extérieure de la bague extérieure (5a, 5b) et la section de base de la section étagée de petit diamètre (9a, 9b) s'engagent dans des positions, avec une phase en direction circonférentielle des parties proches du diamètre intérieur diffère de la phase des trous de montage multiples (10b).

6. L'unité de palier à roulement avec plaque de retenue selon la revendication 1, dans laquelle un seul trou de support (13a, 13b) est prévu dans la plaque de retenue (7a, 7b), et la bague extérieure (5a, 5b) et la plaque de retenue (7a, 7b) sont combinées de manière à ce qu'un déplacement relatif en direction circonférentielle de la bague extérieure (5a, 5b) soit possible.

7. L'unité de palier à roulement avec plaque de retenue selon la revendication 1, dans laquelle des trous de support multiples (13c) sont prévus dans la plaque de retenue (7c), et la bague extérieure (5a, 5b) et la plaque de retenue (7c) sont combinées de manière à ce qu'un déplacement relatif en direction radiale des trous de support (13c) soit possible.

8. L'unité de palier à roulement avec plaque de retenue selon la revendication 1, dans laquelle le diamètre d'un cercle inscrit des trous de montage (10, 10a, 10b) de la plaque de retenue (7a-7c) est supérieur au diamètre extérieur de la bague extérieure (5a, 5b).

9. Un procédé de fabrication pour fabriquer l'unité de palier à roulement avec plaque de retenue selon la revendication 1, comprenant une étape consistant à :
déformer plastiquement les parties du bord circonférentiel des sections de grand diamètre (21) sur une autre surface latérale en direction axiale de la plaque de retenue (7a-7c) vers l'intérieur en direction radiale pour former les protubérances d'engagement (11a, 11b), en pressant les parties du bord circonférentiel des sections de grand diamètre (21) vers une surface de gradin qui s'étend en direction radiale entre la surface circonférentielle extérieure de la bague extérieure (5a, 5b) et une section de base de la section étagée de petit diamètre (9a, 9b) de la bague extérieure (5a, 5b), avec la section étagée de petit diamètre (9a, 9b) logée à l'intérieur du diamètre du trou de support (13a-13c) de la plaque de retenue (7a-7c) avant la formation des protubérances d'engagement (11a, 11b), en combinant la bague extérieure (5a, 5b) et la plaque de retenue (7a-7c) en engageant les protubérances d'engagement (11a, 11b) avec la rainure d'engagement (12, 12b).

10. Le procédé de fabrication de l'unité de palier à roulement avec plaque de retenue selon la revendication 9, dans laquelle les protubérances d'engagement (11b) sont formées en pressant un premier poinçon de forme conique (26) contre les parties des bords circonférentiels des sections de grand diamètre (21) de l'autre surface latérale en direction axiale de la plaque de retenue (7a) avant la formation des protubérances d'engagement (lib) pour former des rainures concaves en forme de V (27) qui s'ouvrent sur l'autre surface latérale en direction axiale de la plaque de retenue (7a), amenant des portions des parties des bords circonférentiels des sections de grand diamètre (21) qui sont situées plus loin sur un intérieur en direction radiale que les rainures concaves (27) à se déformer plastiquement vers l'intérieur en direction radiale, et ensuite en pressant un deuxième poinçon (29) à l'intérieur des rainures concaves (27) ce qui amène les portions qui sont situées plus loin sur l'intérieur en direction radiale que les rainures concaves (27) à se déformer plastiquement plus loin en direction radiale.

11. Le procédé de fabrication de l'unité de palier à roulement avec plaque de retenue selon la revendication 9, dans laquelle un gabarit de retenue (22) est agencé autour de la bague extérieure (5a, 5b) pour entourer la bague extérieure (5a, 5b), et en soutenant une partie intermédiaire en direction radiale d'une surface latérale en direction axiale de la plaque de retenue (7a-7c) avec le gabarit de retenue (22) lors de la formation des protubérances d'engagement (11a, 11b), une charge de traitement est empêchée d'être appliquée à la bague extérieure (5a, 5b).
